# EUROPEAN PATENT APPLICATION

(11) **EP 2 682 849 A1**
(43) Date of publication of application: **08.01.2014**
(21) Application number: 11859694.9
(22) Date of filing: 01.03.2011
(51) Int. Cl.: G06F 3/048, G06T 1/00

(54) **IMAGE POSITIONING METHOD, BROWSING METHOD, DISPLAY CONTROL DEVICE, SERVER, USER TERMINAL, COMMUNICATION SYSTEM, IMAGE POSITIONING SYSTEM AND PROGRAM**

(71) Applicant: Pioneer Corporation, Kawasaki-shi, Kanagawa 212-0031 (JP)
(72) Inventor: YAMADA, Takuya, Kawasaki-shi, Kanagawa 212-0031 (JP)
(74) Representative: Haley, Stephen
(86) International application number: PCT/JP2011/001193
(87) International publication number: WO 2012/117442

(57) **Abstract**

A PC 10 (file music player) arranges a plurality of images on a coordinate space having an X-axis and a Y-axis and has a color element acquisition device 51 which acquires N (N is an integer satisfying N≥3) color elements forming each image from each image, an arrangement determination device 53 which determines an arrangement of the image in the X-axis direction based on an M (where M is an integer satisfying 1≤M≤N) color element among the N color elements and which determines an arrangement of the image in the Y-axis direction based on a remaining (N-M) color element, and an image arrangement device 54 which arranges the plurality of images on the coordinate space based on the determined arrangements.

## Description

### TECHNICAL FIELD

The present invention relates to an image arrangement method by which a plurality of images are arranged on a coordinate space having an X-axis and a Y-axis, a browsing method, a display control device, a server, a user terminal, a communication system, an image arrangement system and a program.

### BACKGROUND ART

As a technology for arranging a plurality of images, there has been proposed a display control device which extracts color elements composing each image and determines arrangements in an X-axis direction and a Y-axis direction based on the extracted color elements. For example, in Patent Document 1, "hue" is assigned to the X-axis, "brightness" or "saturation" is assigned to the Y-axis, and each image is arranged at a corresponding position. This achieves visual regularity when the plurality of images are arranged, resulting in an effect of good presentation.

While, software in recent years dealing with file music enables a user to select music visually using album artworks. This is also applicable to DJ devices for DJ performance. In case that devices dealing with a relatively large number of files such as the DJ devices are considered, a target album cannot be found out efficiently only by arranging the album artworks simply in order of album name or artist name as existing devices. Therefore, it is conceivable that the target album is searched by applying the technology of Patent Document 1, relying on visual information of the album artworks.

[Document 1] JP2009-70317 A

### DISCLOSURE OF THE INVENTION

### [Problems to be Solved]

In Patent Document 1 above, only two elements among "hue", "brightness (luminance)" and "saturation" referred as "three attributes (elements) of color" are taken into account. Shortly, since only one color element is assigned to the X-axis and the Y-axis respectively, images cannot be smoothly arranged visually as to the remaining one color element. Therefore, in case that the album artworks are arranged as "image" on a display screen, it is predicted that finding the target album may be difficult to find. Further, Patent Document 1 above describes a structure in which ON/OFF of a black-white mode is switched as an embodiment in consideration of all three color elements. In the description, images having the "saturation" equal to or above a certain level are arranged based on the "hue" and the "brightness" when the black-white mode is off, and images having the "saturation" under the certain level are arranged based on the "brightness" when the black-white mode is on. However, since the displayed targets are switched by a threshold value of the "saturation" depending on the black-white mode, both displayed targets cannot be displayed seamlessly, which incurs disadvantage especially when images around the threshold level are searched and when a target image is not determined clearly.

Accordingly, in view of the problems above, an object of the invention is to provide an image arrangement method which can arrange a plurality of images in good presentation and enables a user to find a target image effectively, a browsing method, a display control device, a server, a user terminal, a communication system, an image arrangement system and a program.

### [Means to Solve the Problems]

The above object of the invention can be achieved by an image arrangement method arranging a plurality of images on a coordinate space having an X-axis and a Y-axis comprising steps of: a color element acquisition step that acquires N color elements forming each image where N is an integer satisfying N≥3 from each image; an arrangement determination step that determines an arrangement of the image in the X-axis direction based on an M color element among the N color elements where M is an integer satisfying 1≤M≤N and that determines an arrangement of the image in the Y-axis direction based on a remaining (N-M) color element; and an image arrangement step that arranges the plurality of images on the coordinate space based on the determined arrangements.

The above object of the invention can also be achieved by a display control device arranging a plurality of images on a coordinate space having an X-axis and Y-axis comprising: a color element acquisition device that acquires N color elements forming each image where N is an integer satisfying N≥3 from each image; an arrangement determination device that determines an arrangement of the image in the X-axis direction based on an M color element among the N color elements where M is an integer satisfying 1≤M≤N and that determines an arrangement of the image in the Y-axis direction based on a remaining (N-M) color element; and an image arrangement device that arranges the plurality of images on the coordinate space based on the determined arrangements.

According to these structures, the arrangement of the image in the X-axis direction is determined based on the M (M is an integer satisfying 1≤M≤N) color element among the N (N is an integer satisfying N≥3) color elements of each image, and the arrangement of the image in the Y-axis direction is determined based on a remaining (N-M) color element. Shortly, when three color elements are acquired, two color elements are assigned to either one of the X-axis or the Y-axis and the arrangement in one axis direction is determined based on the two color elements. Thus, each image can be arranged regularly and in good presentation.

The "color element" is a concept including hue, brightness or luminance, and saturation which are "three attributes of color", three colors (red, green, blue) of additive mixture, three colors (cyan, magenta, yellow) of subtractive mixture and the like. Further, the "three attributes of color" may indicate an element in any color space (color coordinate system) such as an HLS space or an HSV space.

Further, the "coordinate space having the X-axis and the Y-axis" is not necessarily a two-dimensional space but may be a three-dimensional space. Shortly, it can be a "coordinate space expressed by, at least, the X-axis and the Y-axis". The X-axis is not necessarily perpendicular to the Y-axis.

Still further, the "image" indicates an object which can be arranged in the coordinate space and can be visible, and may be an image or a video. The image may not be a planar but may be a solid.

In the image arrangement method above, the N color elements are hue, luminance and saturation that are three elements of an HLS color space.

In the image arrangement method above, the arrangement determination step determines the arrangement of the image in the X-axis direction based on the hue and determines the arrangement of the image in the Y-axis direction based on the luminance and the saturation.

According to these structures, it is possible to arrange each image regularly and in good presentation based on the "three attributes of color". Further, each image can be arranged in good presentation (smoothly in a visual manner) by using the hue, the luminance (brightness) and the saturation based on the HLS color space.

In the image arrangement method above, the X-axis is a looped endless axis where each image is arranged based on a color circle.

According to the structure, each image can be arranged seamlessly based on the color circle.

In the image arrangement method above, the Y-axis is a looped endless axis having a first semi-arc axis where an image equal to or more than a predetermined saturation is arranged based on the luminance and a second semi-arc axis where an image less than the predetermined saturation is arranged based on the luminance, and the first semi-arc axis and the second semi-arc axis are configured to form one arc to connect a maximum value of luminance on one axis to a maximum value of luminance on the other axis and to connect a minimum value of luminance on the one axis to a minimum value of luminance on the other axis.

According to the structure, each image can be arranged in the Y-axis direction based on the luminance and the saturation. Especially, since the first semi-arc and the second semi-arc are configured to make one arc by connecting each maximum value and each minimum value of luminance on each axis, each image can be arranged smoothly in a visual manner with respect to both the luminance and the saturation.

In the image arrangement method above, the predetermined saturation is defined by correction saturation calculated in consideration of luminance effect.

According to the structure, since saturation actually felt by a person is subject to influence of the luminance, each image can be arranged in good presentation (smoothly in a visual manner) by defining a threshold value by the correction saturation.

In the image arrangement method above, the color element acquisition step acquires the hue, the luminance and the saturation for all pixels of each image, the method further has a representative value determination step that determines a representative value of the hue, the luminance and the saturation of each image based on the hue, the luminance and the saturation of all the pixels, and the arrangement determination step determines the arrangements in the X-axis direction and the Y-axis direction based on each representative value of the hue, the luminance and the saturation of each image.

According to the structure, since the representative value of each color element per image is determined from each color element acquired for all pixels, it is possible to arrange in good presentation by the representative color (color imaged by the user) even the image includes complex design (image with plural colors) such as an album artwork.

A browsing method of the invention has steps of: each step of the image arrangement method above; and a display control step that displays the coordinate space where the plurality of images are arranged on a display screen, wherein the display control step shifts display positions in an X-axis direction and a Y-axis direction on the coordinate space seamlessly based on a screen shift operation by a user.

According to the structure, since each image is arranged regularly and in good presentation base on the color element, it is possible to find a target image efficiently. Further, since both the X-axis and the Y-axis in the coordinate space are looped endless axes, display positions of the display screen can be shifted seamlessly in the X-axis direction and the Y-axis direction based on the screen shift operation by the user, enabling the user to find the target image immediately.

In the browsing method, the display control step changes display sizes of the coordinate space and each image based on a screen enlargement operation and a screen reduction operation by the user, and each image is filled with a representative color based on each representative value of the hue, the luminance and the saturation when an image size of each image is equal to or less than a predetermined size.

According to the structure, since display sizes of the coordinate space and each image can be changed, it is possible to find the target image efficiently regardless of the arranged number of images. Further, since each image is filled with the representative color when the image size of each image is less than the predetermined size, it is possible to find the target image from the image which the user remembers even a resolution of the display screen is low.

In the browsing method, when an arbitrary image is selected by a selection operation by the user in a state that each image has not been completely read in, the display control step starts to read in from the arbitrary image.

According to the structure, since the arbitrary image selected by the user is firstly read in, it is possible to check the arbitrary image sooner.

In the browsing method above, when the number of images displayed on the coordinate space decreases by filtering condition input by the user, the display control step displays only an image corresponding to the filtering condition while maintaining an image layout before the decrease.

According to the structure, it is possible to refine images to be displayed based on the filtering condition input. Also, since the arrangements of images corresponding to the filtering condition do not change, the target image cannot be lost when the refinement is gradually performed to find the target image.

In the browsing method above, when the number of images displayed on the coordinate space decreases by filtering condition input by the user, the display control step displays a rearranged coordinate space by the arrangement determination step only for an image corresponding to the filtering condition.

According to the structure, since the images corresponding to the filtering condition gather by the rearrangement when the number of images is extremely fewer due to the filtering, it is possible to easily find the target image.

In the browsing method above, when the number of images displayed on the coordinate space decreases by filtering condition input by the user and the decreased number of images is equal to or more than a predetermined number, the display control step displays a rearranged coordinate space by the arrangement determination step only for an image corresponding to the filtering condition, and when the decreased number of images is less than the predetermined number, the display control step displays only an image corresponding to the filtering condition while maintaining an image layout before the decrease.

According to the structure, a preferable arrangement can be achieved based on the decreased number of images by the filtering. More specifically, when the number of images is extremely fewer by the filtering, the images are rearranged so that the target image can be easily found. Further, since the image layout does not change when the number of images does not change substantially before/after the filtering, the target image cannot be lost.

The invention provides a server arranging a plurality of images on a coordinate space having an X-axis and a Y-axis and providing the coordinate space to a user terminal comprising: a color element acquisition device that acquires N color elements forming each image where N is an integer satisfying N≥3 from each image; an arrangement determination device that determines an arrangement of the image in the X-axis direction based on an M color element among the N color elements where M is an integer satisfying 1≤M≤N and that determines an arrangement of the image in the Y-axis direction based on a remaining (N-M) color element; and an image arrangement device that arranges the plurality of images on the coordinate space based on the determined arrangements.

The invention provides a user terminal used to connect with the server described above and comprising a display screen that displays the coordinate space and an operation device that selects an arbitrary image among a plurality of images arranged on the coordinate space.

The invention provides a communication system comprising the server described above, and a user terminal used to connect with the server and having a screen display that displays the coordinate space and an operation device that selects an arbitrary image among a plurality of images arranged on the coordinate space, the server being capable of communicating with the user terminal.

The invention provides an image arrangement system arranging a plurality of images on a coordinate space having an X-axis and a Y-axis and providing the coordinate space to a user terminal comprising: a color element acquisition device that acquires N color elements forming each image where N is an integer satisfying N≥3 from each image; an arrangement determination device that determines an arrangement of the image in the X-axis direction based on an M color element among the N color elements where M is an integer satisfying 1≤M≤N and that determines an arrangement of the image in the Y-axis direction based on a remaining (N-M) color element; an image arrangement device that arranges the plurality of images on the coordinate space based on the determined arrangements; a display screen that displays the coordinate space; and an operation device that selects an arbitrary image among the plurality of images displayed on the display screen.

According to these structures, the invention can be achieved in the server on the network. Further, the invention can be applied to a cloud computing. Still further, when the invention is applied to a structure in which the server, the PC and the user terminal are connected via network, the communication device communicating with the screen display, the operation device, server and/or the PC may, at the very least, be provided in the user terminal, and other devices (the color element acquisition device, the arrangement determination device and the image arrangement device) may be provided in either the server, the PC or the user terminal, or may be provided separately therein.

The invention provides a program that causes a computer to execute each step of the image arrangement method as described above or each step of the browsing method as described above.

The image arrangement method by which the plurality of images can be arranged in good presentation and the browsing method by which the target image can be found effectively can be achieved by using the program.

### BRIEF DESCRIPTION OF THE DRAWINGS

[Fig. 1] Fig. 1 is a structure diagram of a PC according to one embodiment of the invention.
[Fig. 2] Fig. 2 is a diagram illustrating a screen display example of a file music player.
[Fig. 3] Fig. 3 is a functional block diagram of the PC.
[Fig. 4] Fig. 4 is a diagram illustrating an arrangement example of a single color image group on a two-dimensional coordinate space.
[Fig. 5] Fig. 5 is a diagram illustrating a correspondence relationship between each axis and an HLS color space.
[Fig. 6] Fig. 6 is a diagram illustrating representative HLS values of each image and an arrangement example thereof.
[Fig. 7] Fig. 7 is an exemplary calculating expression for corrective saturation.
[Fig. 8] Fig. 8 is a flowchart illustrating a representative value determination process of each image.
[Figs. 9A and 9B] Figs. 9A and 9B are flowcharts illustrating an arrangement determination process of each image.
[Figs. 10A and 10B] Figs. 10A and 10B are explanatory diagrams of display control based on a parallel shift operation of a user.
[Fig. 11A and 11B] Figs. 11A and 11B are explanatory diagrams of the display control based on a screen enlargement/reduction operation of the user.
[Figs. 12A and 12B] Figs. 12A and 12B are explanatory diagrams for image reading-in action.
[Fig. 13] Fig. 13 is a diagram illustrating an example of a music selection screen.
[Figs. 14A, 14B and 14C] Figs. 14A, 14B and 14C are explanatory diagrams of the display control based on input of filtering conditions by the user.
[Figs. 15A and 15B] Figs. 15A and 15B are diagrams illustrating an example of the music selection screen for describing a music selection flow.
[Fig. 16] Fig. 16 is a diagram illustrating an example of an operation screen for describing refinement based on a category, a key and a key word.
[Fig. 17] Fig. 17 is a diagram illustrating another screen display example of the file music player.
[Fig. 18] Fig. 18 is a diagram illustrating a tonality space of a cycle of fifths.

### BEST MODES FOR CARRYING OUT THE INVENTION

An image arrangement method, a browsing method, a display control device, a server, a user terminal, a communication system, an image arrangement system and a program according to one embodiment of the invention will be described in detail with reference to accompanying drawings hereinafter. The embodiment will be exemplified by applying a "file music player" running on a personal computer (referred as "PC" hereinbelow).

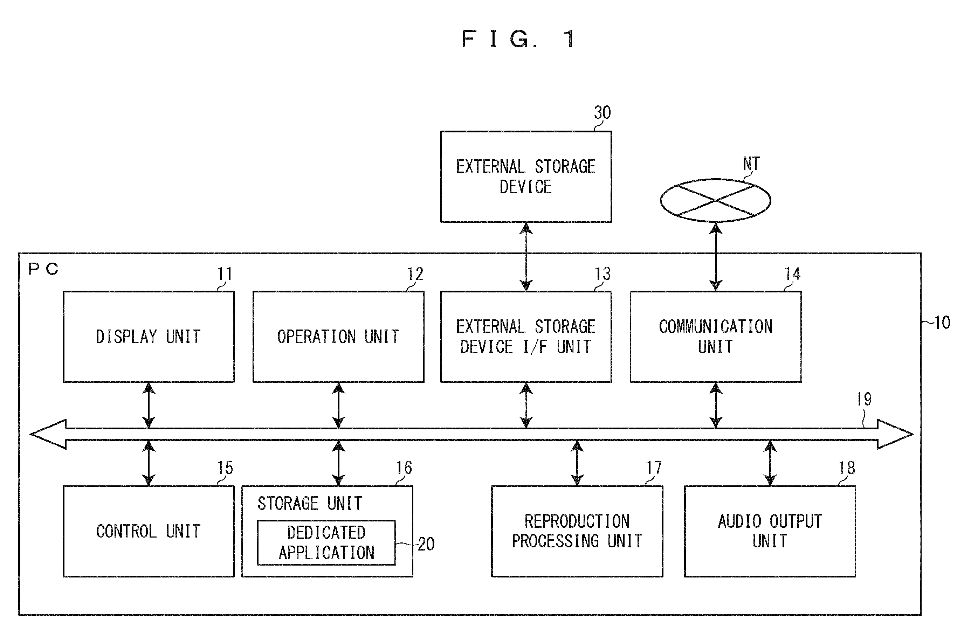

FIG. 1 is a structure diagram illustrating a schematic structure of a PC 10 (display control device). As illustrated in FIG. 1, the PC 10 has a display unit 11, an operation unit 12, an external storage device interface unit (referred as "external storage device I/F unit" hereinbelow) 13, a communication unit 14, a control unit 15, a storage unit 16, a reproduction processing unit 17, an audio output unit 18 and a bus 19 connecting therebetween.

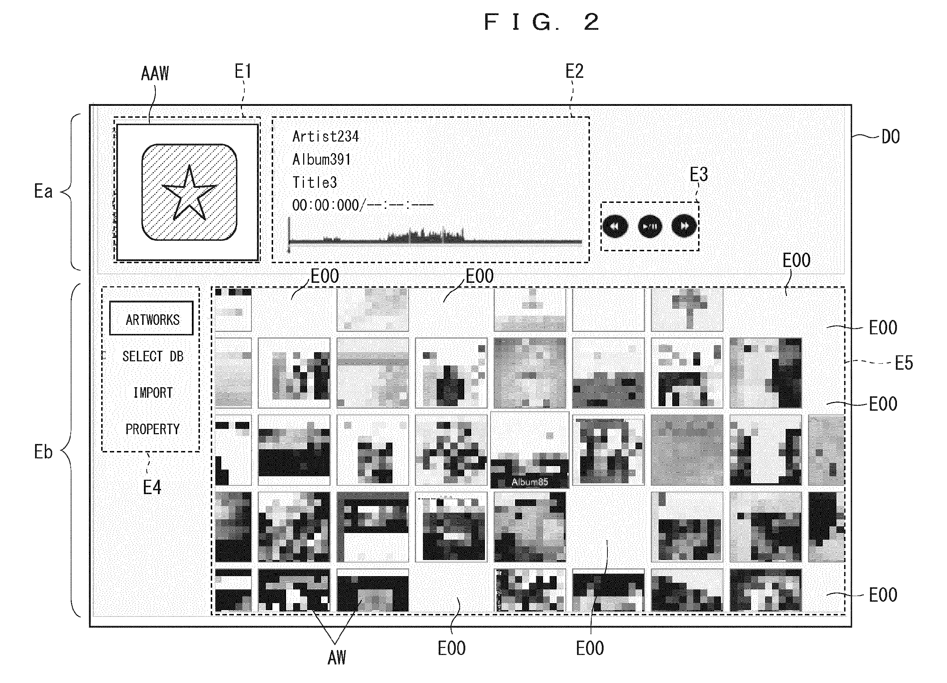

The display unit 11 displays an operation screen D0 (see FIG. 2) and the like of the file music player on a display screen (not illustrated). Especially, the embodiment is characterized by displaying numerous album artworks AAW on a browser area E5 in the operation screen D0 in an arrangement based on color elements acquired from the album artworks AAW. The operation unit 12 has a mouse, a keyboard, a touch pad and the like and is used for various operations by a user.

The external storage device I/F unit 13 inputs/outputs information between the PC 10 and the external storage device 30 such that music information, etc. is read out from the external storage device 30. The external storage device 30 indicates a storage device (such as an external hard disk device) connected locally with the PC 10 or a USB memory readable via a memory slot provided in the PC 10.

The communication unit 14 communicates, via the network NW such as the Internet or an intranet, between the PC 10 and a device (server) on a network NW to acquire the music information etc. from a memory of the device on the network NW.

The control unit 15 has a CPU (Central Processing unit), a ROM (Read Only Memory), a RAM (Random Access Memory) and the like and processes various calculations. Further, the control unit 15 performs display control of the display unit 11 based on operations of the operation unit 12, information input/output control via the external storage device I/F unit 13 and the communication unit 14, an editing process (including a mixing process) of music, reproduction control of music, and the like.

The storage unit 16 includes a hard disk drive, etc. and stores a dedicated application 20 for realizing the file music player and stores the music information. A music file (or pass of the music file) and music associated information is stored as the "music information". The music associated information is music identification information (music ID), a music title name, an album name, an artist name, a genre name, a composer name, a remixer name, a label name, an ID of the album artwork AAW, an image file (or pass of the image file) of the album artwork AAW, representative color information of the album artwork AAW, a release date, an ID of a music artwork TAW, an image file of the music artwork TAW (or pass of the image file), representative information of the music artwork TAW, a rate (evaluation by the user), BPM (Beats Per Minute), music tonality (key), audio waveform data, presence/absence of music sound, a melody, a harmony, a rhythm, a database registration date, a music file last update date, music length (reproduction time), access history such as the number of reproduction, a reproduction date, and the like.

The genre, the BPM, the music tonality, the audio waveform data, the presence/absence of music sound, the melody, the harmony, the rhythm and the like may be acquired from an analysis result of the music file by the dedicated application 20. Further, they may be preliminary set in the music associated information or may be designated by the user. Still further, the representative color information of the album artwork AAW and the music artwork TAW is acquired from the image file of artwork AW (the album artwork AAW and the music artwork TAW will be noted as "artwork AW" hereinbelow) (details thereof will be described later), but they may be preliminary set in the music associated information or may be designated by the user. In case that the music artwork TAW is not specifically set, a same image as that of the album artwork AW may be used.

The reproduction processing unit 17 processes reproduction of the music file under control of the control unit 15 and outputs the reproduction signals to the audio output unit 18. The audio output unit 18 has a DSP, an amplifier, a speaker or a headphone and the like, and outputs the reproduction signals externally. An external audio output unit may be used as the audio output unit 18.

Referring to FIG. 2, the operation screen D0 of the file music player will be described. The operation screen D0 includes a player section Ea at an upper portion of the screen and a browser section Eb at a lower portion thereof. The player section Ea displays information about music being reproduced, and has an artwork display area E1 displaying an album artwork AAW of the music, a reproduction information display area E2 displaying music information, a reproduction time, audio waveform and the like of the music currently reproduced in the album, and a button group display area E3 for various reproduction operations.

While, the browser section Eb is used for various operations and information confirmation by the user, and has a user operation area E4 for selecting operation content and a browser area E5 in which numerous album artworks AAW are arranged. In the user operation area E4, an "ARTWORKS button" for displaying the browser area E5, a "SELECT DB button" for selecting an arbitrary database file (the external storage device 30, the device on the network NW, the storage area of the storage unit 16), an "IMPORT button" for taking in the music information, a "PROPERTY button" for displaying the music information, and the like. The operation screen D0 in FIG. 2 indicates a state where the "ARTWORK button" is selected.

Further, in the browser area E5, an image group of the album artwork AAW corresponding to each music file in the selected database is arranged in an X-axis direction (lateral direction in FIG. 2) and in a Y-axis direction (vertical direction in FIG. 2) based on three color elements (hue, luminance and saturation of an HLS color space). In other words, album artworks AAW (also refereed as "images" hereinbelow) are arranged in a discrete two-dimensional space such that album art works AAW having closer color elements are arranged in a closer position (to be in gradation). The image group is not necessarily arranged without a gap in the vertical/lateral directions (as complete matrix shape), but is preferentially arranged to acquire smooth change in all the three color elements based on representative color of each image. Accordingly, a blank area E00 having no image is generated throughout the browser area E5. An algorithm for determining the representative color (HLS representative value) of each image and an algorithm for determining an arrangement of each image will be described later.

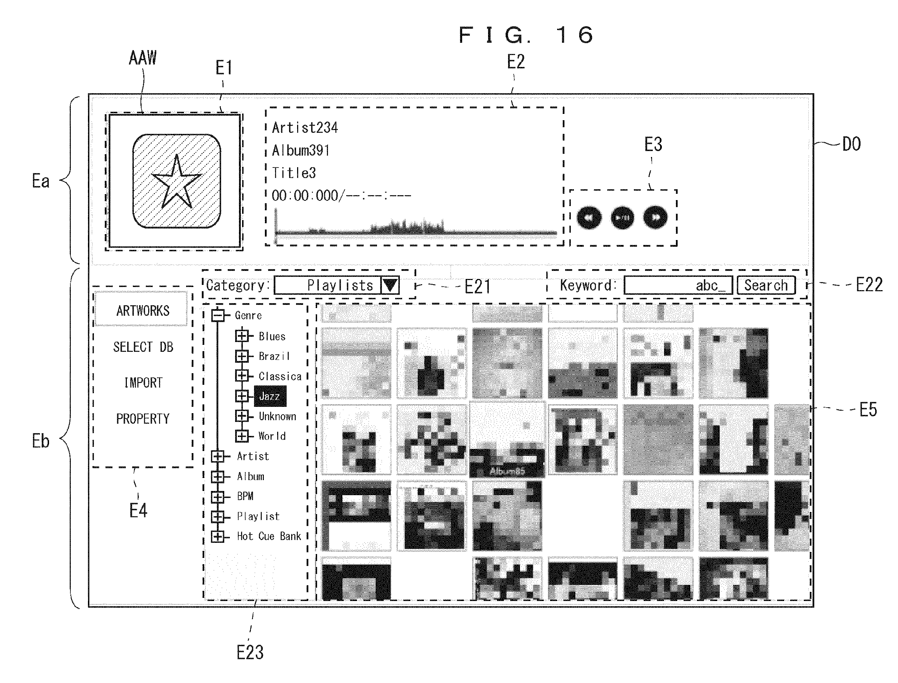

Further, the file music player of the embodiment has a refinement function by which the image group displayed on the browser area E5 is refined in accordance with input of a filtering condition such as the genre, the album name, the artist name, the BPM, the access history such as the number of reproductions or the reproduction date, the release date. Still further, it is possible to switch the image group displayed on the browser area E5 where all the album artworks AAW are displayed to the album art works AAW of representative albums of artists, the artworks AW of the playlist, the music artworks TAW or the audio waveform data of music and the like. Details thereof will be described with reference to FIG. 16. A jump function is further provided, which jumps to the album artwork AAW of the album including the designated music on the browser area E5 by designating the music currently reproduced or music in the playlist.

In the browser area E5, the album having no album artwork AAW is not displayed. This is because not only it will make a visual appearance bad but also disturb to search other albums having the album artworks AAW, in case that an image indicating that there is no album artwork AAW is displayed, for example, as existing devices. The albums without the album artworks AAW can be searched by information (album name search, artist name search, etc.) other than the album artworks AAW.

Further, the browser area E5 displays the albums having the same album artwork AAW as a whole. In case that discrete albums on the music database such as plurality couples of disks or compilation albums are set with the same album artwork AAW, they are displayed as one album artwork AAW. This is because it is difficult to discriminate the same album art works AAW if the same album artworks AAW are displayed on the browser area E5. Naturally, it is conceivable that information other than the album artworks AAW is displayed on the browser area E5 so as to discriminate respective album artworks AAW, but the user has to check information in addition to the album artworks AAW, leading to get in the way of instinctive browsing with the album artworks AAW. Therefore, in case that the album artwork AAW linked to a plurality of albums is selected, firstly the album artwork AAW is selected, and secondly another screen for selecting a target album is displayed. By displaying the albums as a whole having the same album artwork AAW, substantive information amount which can be displayed/checked at once in a same scale size increases, which gives an advantage that the target album artwork AAW can be easily found.

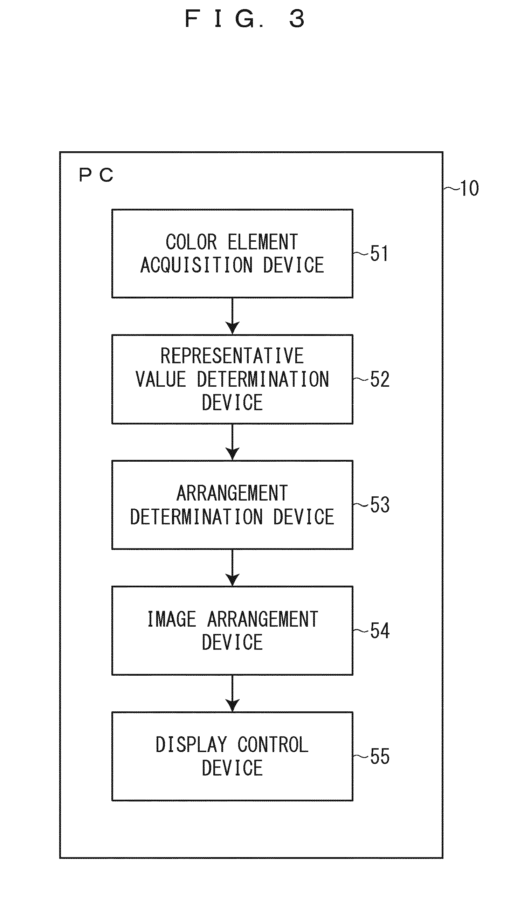

Referring to FIG. 3, a functional structure of the PC 10 (file music player) will be described. The PC 10 has a color element acquisition device 51, a representative value determination device 52, an arrangement determination device 53, an image arrangement device 54 and a display control device 55 as main functional structure. These devices are realized by the control unit 15 using the dedicated application 20.

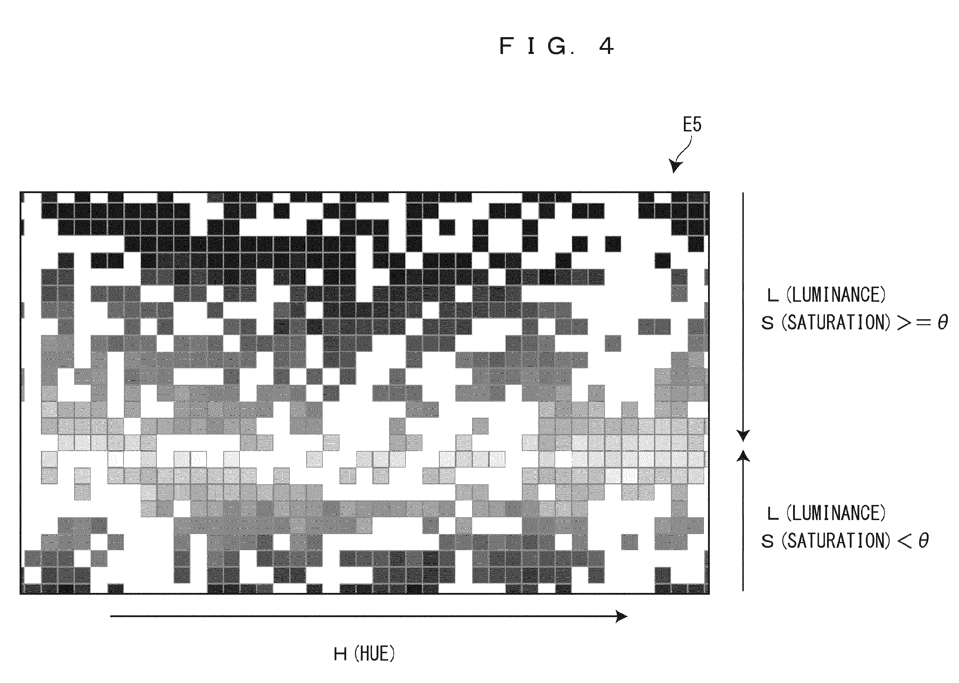

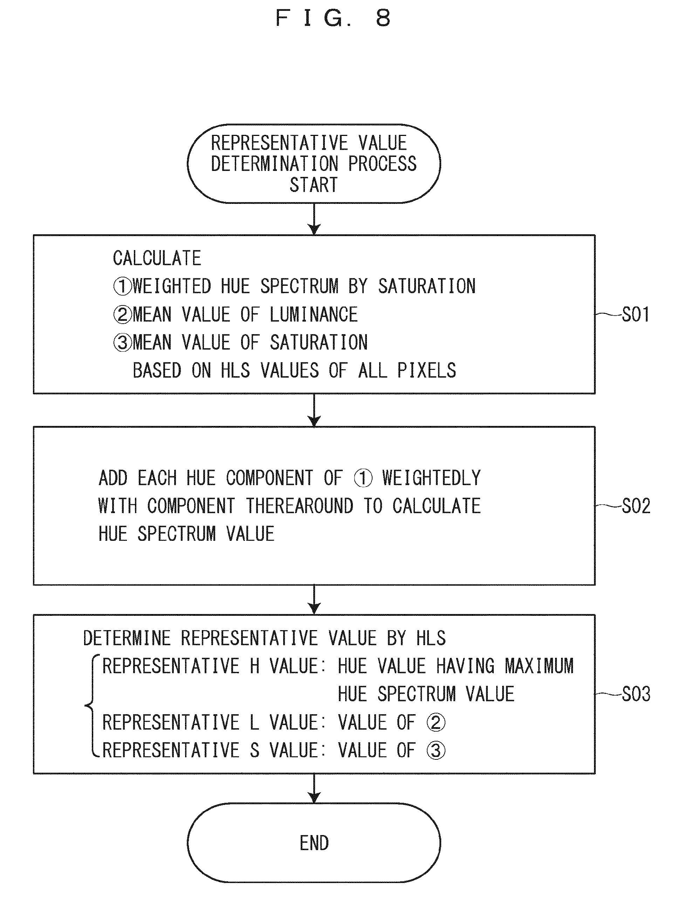

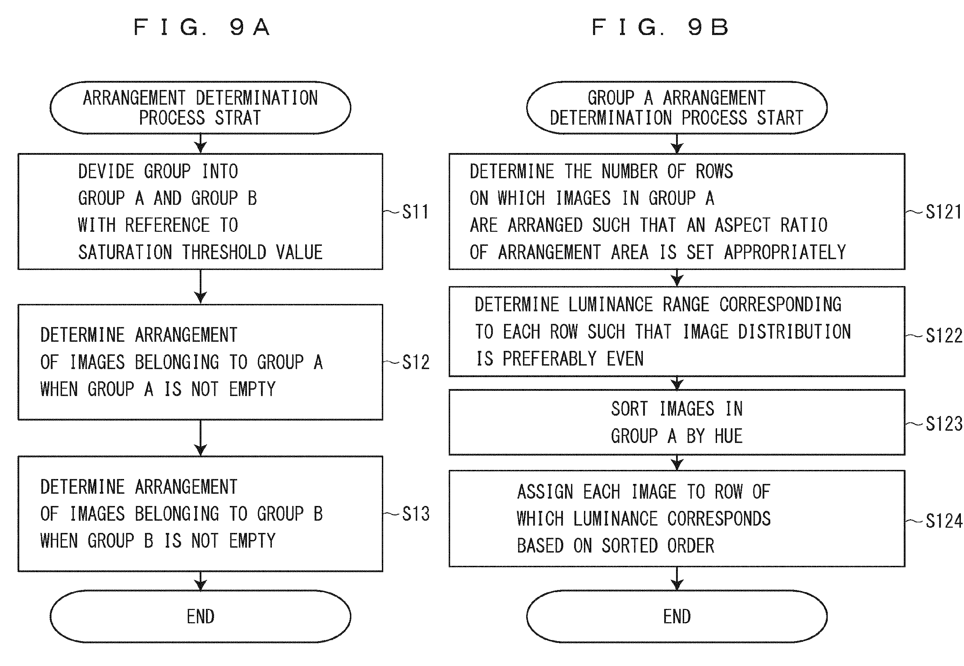

The color element acquisition device 51 acquires a plurality of color elements constituting each image from each image. More specifically, the hue (H value), the luminance (L value) and the saturation (S value) is acquired for all pixels of each image. The representative determination device 52 determines each representative value of the hue, the luminance and the saturation per image based on the acquired hue, luminance and saturation for all the pixels (described later with FIG. 8). Further, the arrangement determination device 53 determines an arrangement in the X-axis direction and the Y-axis direction based on each representative value of the determined hue, luminance and saturation per image (described later with FIG. 9). The image arrangement device 54 arranges each image on the two-dimensional coordinate space (browser area E5) having the X-axis and the Y-axis based on the arrangement determined by the arrangement determination device 53. The display control device 55 controls to display based on user's operations such that a display position on the browser area E5 is shifted seamlessly based on a screen shift operation by the user. Each function will be described in detail with reference to FIG. 4 hereinafter.

Firstly, referring to FIGS. 4 to 6, a correspondence relationship between the HLS color space and the two-dimensional coordinate space will be described. FIG. 4 illustrates an arrangement example of the single color image group on the browser area E5. To make the explanation clearer, each image is shown by a single image. As illustrated in FIG. 4, the hue (H value) is assigned to a lateral axis of the browser area E5. While, the luminance (L value) and the saturation (S value) is assigned to a vertical axis (axis perpendicular to the lateral axis) of the browser area E5. Regarding the assignment in the vertical direction, each image is divided into an image group having saturation equal to or more than a threshold value θ (predetermined saturation) and the other image group having less than the threshold value θ. The former image group is arranged such that the luminance is getting higher from the top side toward the center in FIG. 4 (along an arrow 71), and the latter image group is arranged such that the luminance is getting higher from the bottom side toward the center in FIG. 4 (along an arrow 72).

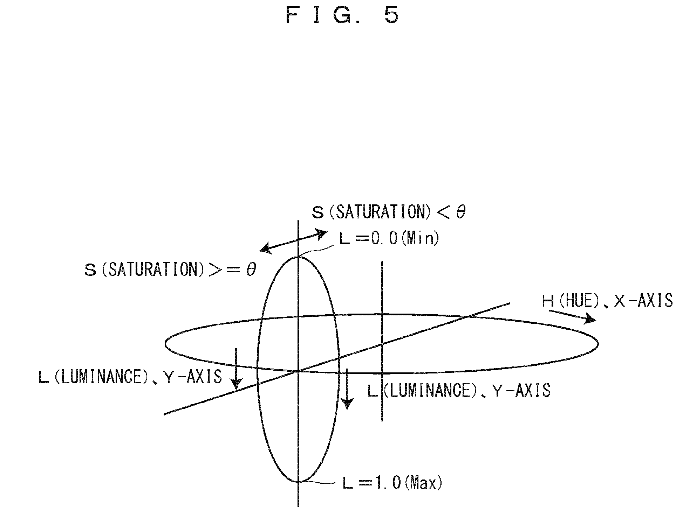

FIG. 5 illustrates a correspondence relationship between each axis and the HLS color space. FIG. 5 illustrates the lateral axis (X-axis) and the vertical axis (Y-axis) in FIG. 4 conceptually. The X-axis is an endless loop axis along which each image is arranged based on a color circle (see the laterally long arc in FIG. 5). While, the Y-axis is an endless loop axis (see vertically long arc in FIG. 5) having a left side semi-arc axis (first semi-arc axis) where images having the saturation equal to or more than the threshold value θ are arranged based on the luminance and a right side semi-arc axis (second semi-arc axis) where images having the saturation less than the threshold value e are arranged based on the luminance. Both the left side semi-arc axis and the right side semi-arc axis have a minimum value of the luminance at the top end and the maximum value of the luminance at the bottom end. Shortly, the Y-axis is configured such that the maximum values and the minimum values of the luminance on each semi-arc axis are linked to form one arc.

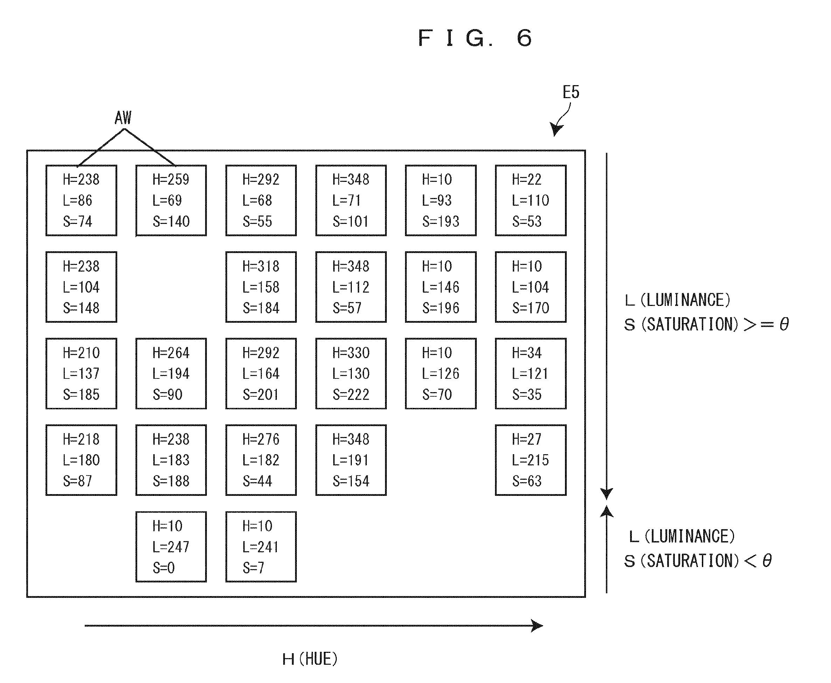

FIG. 6 is a diagram illustrating a state where each image is practically arranged based on the correspondence relationship between the HLS color space and the two-dimensional coordinate space illustrated in FIGS. 4 and 5. In each image area, the representative HLS values of the image are written. As illustrated in FIG. 6, it is noted that the image group is arranged based on the hue (H values) in the lateral axis (X-axis) and the image group of which saturation is equal to or more than the threshold level e is arranged so that the luminance (L value) is getting higher approximately along the arrow 73 in the vertical axis (Y-axis). The saturation (S value) has variation in value. The example in FIG. 6 exemplifies a case in which the threshold value e is set as e = 30 (0-255).

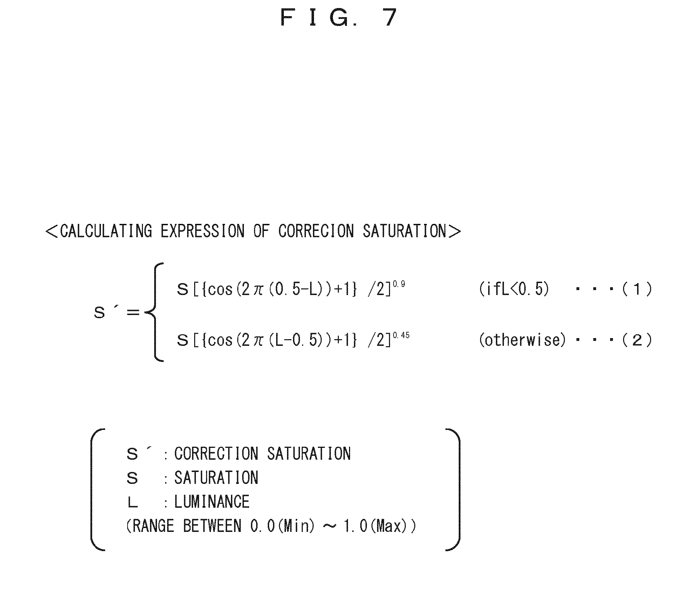

Referring to FIG. 7, saturation correction by the luminance will be described. In the HLS color space, the farther the luminance from the center (0.5) is away, the smaller saturation effect becomes, and a same color (black or white) is set regardless of the saturation value when the luminance is at the maximum value or at the minimum value. Considering this situation, the correction saturation (S') is calculated by the calculating expression described in FIG. 7 or an expression based on the calculating expression in the representative value (representative HLS value) determination process with a representative value determination device 52 described later to make the representative saturation. In the calculating expression described in FIG. 7, S' indicates the correction saturation, S indicates the saturation (S value) and L indicates the luminance (L value). Further, S', S and L are described to have a range between a minimum value "0.0" to a maximum value "1.0". When the calculating expression described in FIG. 7 is used, it is preferable that the image group be divided with a threshold value of the correction saturation S' as approximately "0.12".

Referring to FIG. 8, the representative value (representative HLS value) determination process by the representative value determination device 52 will be described. The representative determination device 52 calculates weighted hue spectrum by the saturation (correction saturation S'), a mean value of the luminance (L value) and a mean value of the saturation (correction saturation S') (S01). The correction saturation S' is a saturation value in consideration of luminance effect by the calculating expression in FIG. 7. Consequently, each hue component of the weighted hue spectrum by the saturation acquired in S01 is weightedly added with components therearound to calculate a hue spectrum value (S02). The weighting is set such that closer components have larger weights (less than 1.0 at a maximum), farther components have smaller weights, and farther components to some extent have "0". The representative value determination device 52 determines the representative values by HLS (S03) as the representative H value of which the hue spectrum value acquired in S02 is the maximum hue value, the representative L value which is the mean value of the luminance acquired in S01, and the representative S value which is the mean value of the saturation acquired in S01. Thus, the representative color of each image is defined based on the representative values by HLS determined by the representative value determination device 52.

Referring to flowcharts in FIGS. 9A and 9B, the arrangement determination process by the arrangement determination device 53 will be described. As illustrated in FIG. 9A, the arrangement determination device 53 divides the image group into a group A and a group B with reference to the saturation threshold value e (S11). The group A has the saturation S equal to or more than the threshold value e and the group B has the saturation S less than the threshold value e. Then, the arrangement determination device 53 determines an arrangement of images belonging to the group A when the group A is not empty (S12). Likewise, an arrangement of images belonging to the group B is determined when the group B is not empty (S13).

FIG. 9B is a sub-flowchart illustrating the S02 process (group A arrangement determination process) in FIG. 9A. The arrangement determination device 53 determines the number of rows on which the images in the group A are arranged such that an aspect ratio of the arrangement area is set appropriately (S121). Then, a luminance range corresponding to each row is determined such that image distribution is preferably even (S122). Thereafter, the images in the group A are sorted by the hue (representative H value) (S123) and each image is assigned to a row of which the luminance (representative L value) corresponds to (S124) based on a sorted order. In S124, when a corresponding row is already assigned, a closest row or column as possible is assigned. In case that there is no visually natural assignment position, the same process is repeated after moving to the next row. When all the images belonging to the group A are assigned, the group A arrangement determination process terminates. The position not assigned with the image is set to the blank area E00 (see FIG. 2).

A sub-flowchart of the S03 process in FIG. 9A is almost the same as the group A arrangement determination process and the explanation thereof is omitted. In this regard, in case that both the group A and the group B are not empty, the number of rows on which the group B is arranged is determined as many as the number of columns of the group B which are about the same as that of the group A.

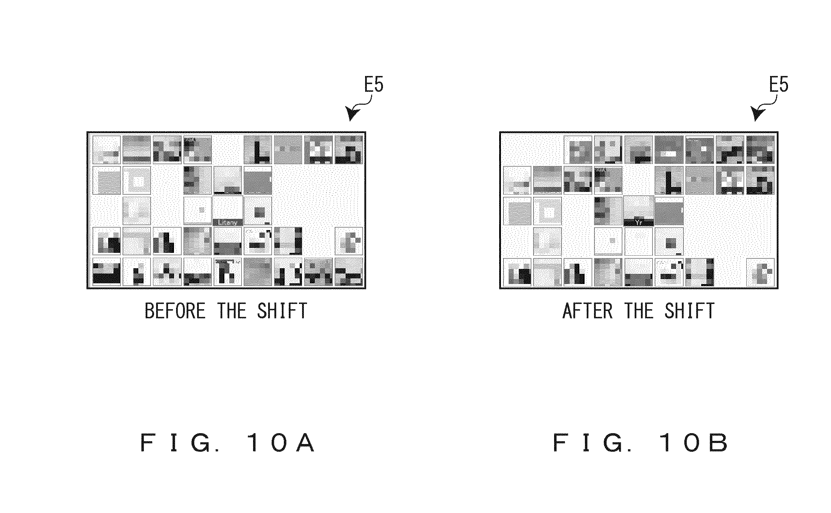

Referring to FIGS. 10 to 14, the display control by the display control device 55 will be described. FIGS. 10A and 10B are explanatory diagrams for the display control based on a parallel shift operation by the user. When an operation by which a display position is raised by one row of image in the Y-axis direction is performed from a state illustrated in FIG. 10A with the operation unit 12, a state illustrated in FIG. 10B is achieved. Shortly, the parallel shift in the X-direction and the Y-direction can be made based on the screen shift operation by the user. Further, as illustrated in FIG. 5, since both the X-axis and the Y-axis are arranged on the looped two-dimensional coordinate space, it is possible to shift seamlessly in the X-axis direction and the Y-axis direction. This allows the user to operate without consideration, for example, whether a target red color image is positioned at the left end with the hue value "0 degree" or at the right end with the hue value "359 degrees". In the example of FIGS. 10A and 10B, the image positioned at the center of the screen is being selected and is displayed rather larger than other images or displayed with a border. The selected image may be displayed in detail (in high image quality) than other non-selected images.

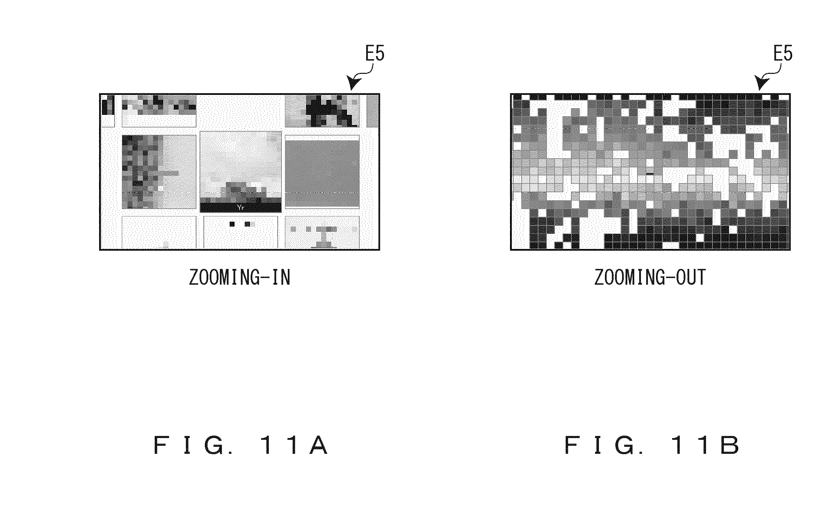

FIGS 11A and 11B are explanatory diagrams for the display control based on a screen enlargement/reduction operation by the user. FIG. 11A illustrates a zooming-in state after the screen enlargement operation, for example, from the state illustrated in FIG. 10A. While, FIG. 11B illustrates a zooming-out state after the screen reduction operation, for example, from the state illustrated in FIG. 10A. Thus, seamless zooming-in/zooming-out can be made with the screen enlargement/reduction operation by the user. Further, in case that a display size of images is too small to discriminate or the images cannot be entirely displayed due to a specification factor of the PC 10, each image is filled with a representative color (color based on each representative value of the hue, the luminance and the saturation. See FIG. 8) to display as a single color image. This enables the user to easily estimate a position where a target image exists, relying on a memory about color from the state that the user looks the whole by the zooming-out (state of FIG. 11B). Further, it is possible to immediately find the target image by the parallel shift and the zooming-in around a position where the target image is considered to exist.

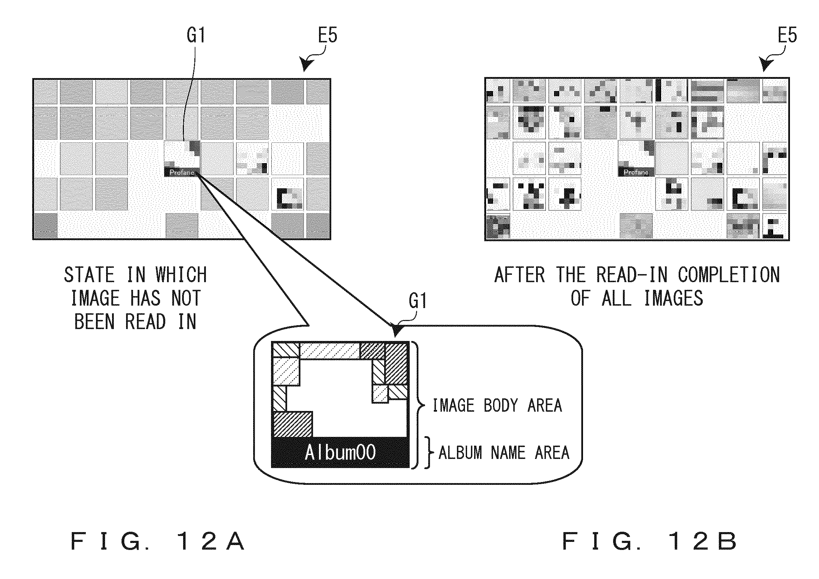

FIGS. 12A and 12B are explanatory diagrams of image reading-in action. FIG. 12A illustrates a state just after the image G1 positioned at approximately the center of the browser area E5 has been selected (designated) by the user. As illustrated in FIG. 12A, the image G1 selected by the user is highlighted. More specifically, decorations are made such as applying a thick-frame to an image frame, displaying slightly larger than other images, adding an "album name area" (in translucent) by superimposing on the lower portion of an "image body area" expressing the album artwork AAW. Further, in case that the user operates to select in a state that reading in the image has not been completed, the selected image G1 is read in first (the example in FIG. 12A illustrates a state that two images have already been read in before the image G1 is selected). Shortly, even in a situation where all the images are not read in, a browsing action for the selected image G1 progresses, necessary images are read in and are resized at a background, and completed images are sequentially updated to be displayed. Images which have not been read in are displayed as a single color image filled with the representative color as illustrated in FIG. 12A. Images which have been read in and have not been resized (for example, see the image G1 in FIG. 12A) are displayed as a high-speed simplified resized image with low image quality, and are sequentially updated. FIG. 12B illustrates a state after the read-in completion of all the images (practically displayed in higher image quality).

Regardless whether the image reading-in has been completed or not, the selected image G1 may be displayed more in detail than other images (by adding more pieces of information or by high image quality). In this case, simplified display is preferable such that the other images are displayed in a single color. Further, when the selected image is changed, the image which has been selected may be displayed in simplified display and the newly selected image may be displayed in detail. While, when the selected image is changed, both the images which has been selected and is newly selected may be displayed in detail.

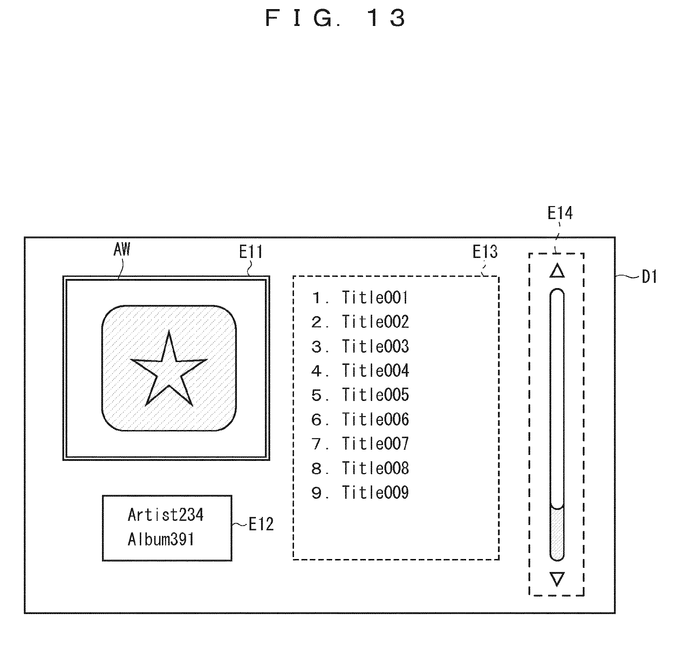

Next, Fig. 13 is a diagram illustrating an example of a music selection screen D1 illustrated when one image (album art work AAW) is selected by the user (see FIG. 12A). The music selection screen D1 is a pop-up screen superimposingly displayed on the browser area E5, and has an artwork display area E11 displaying the selected album artwork AAW, a music information display area E12 displaying the music information, a title list display area E13 displaying a title list of the music included in the selected album, and a scroll bar display area E14 displaying a scroll bar used for scroll operations on the title list display area E13. The scroll bar display area E14 may be displayed only when all the music titles cannot be displayed in the title list display area E13 due to a large number of titles or the like. On the music selection display D1, in addition to the music selection, albums having the same album artwork AAW can be selected (disc 1/2 of a double album CD, etc.), and the album selection screen (see the browser area E5 in FIG. 2) can be returned by cancelling.

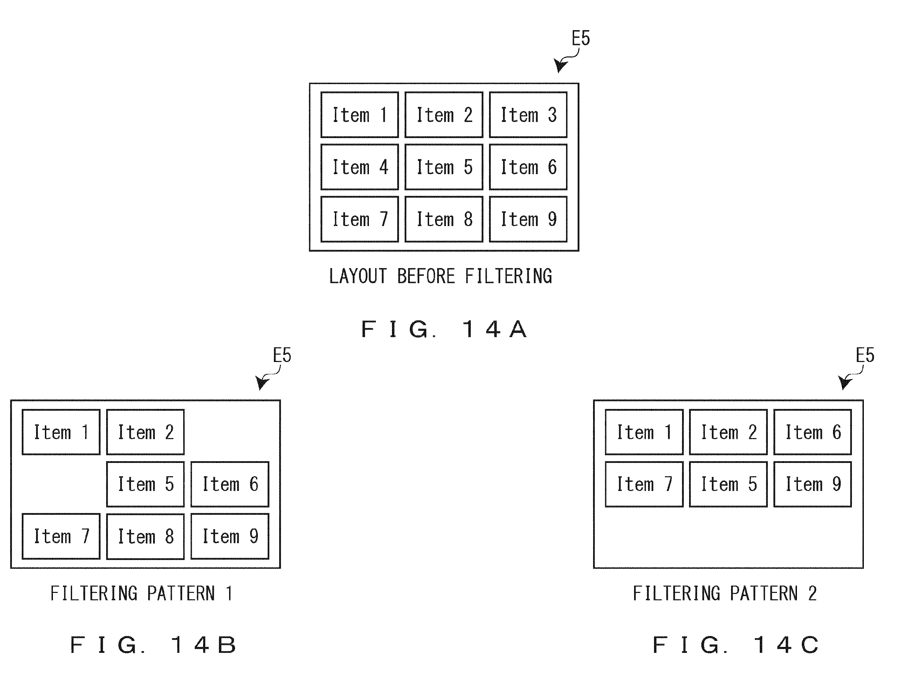

Next, FIGS. 14A to 14C are explanatory diagrams of the display control with input of filtering conditions by the user. The file music player of the embodiment can refine image groups displayed on the browser area E5 by the input of the filtering conditions such as the genre, the album name, the artist name, the access history such as the number of reproduction or the reproduction, and the release date. For example, when the filtering conditions are input in the state that each image (item) is arranged in the browser area E5 as illustrated in FIG. 14A and the number of images decreased by the condition input is less than a predetermined number, a layout of a filtering pattern 1 illustrated in FIG. 14B is used. Shortly, the images only corresponding to the filtering conditions are displayed while an original layout (position of each image) before the decrease of the number of images is maintained. On the other hand, when the number of images decreased by the condition input is equal to or more than the predetermined number, a layout of a filtering pattern 2 as illustrated in FIG. 14C is used. Shortly, the layout is such that only the images corresponding to the filtering conditions are rearranged by the arrangement determination device 53. Thus, the display control device 55 of the embodiment can realize a preferred arrangement based on the number of images decreased by the filtering. In other words, in case that the number of images before/after the filtering is not substantially changed, an image layout does not change as illustrated in FIG. 14B. Therefore, the user does not lose the target image. Further, in case that the number of images extremely decreases such that, for example, all the images can be displayed on the browser area E5 by the filtering, the images are rearranged as illustrated in FIG. 14C. Therefore, the number of screen shift operations decreases and the target image can be easily found.

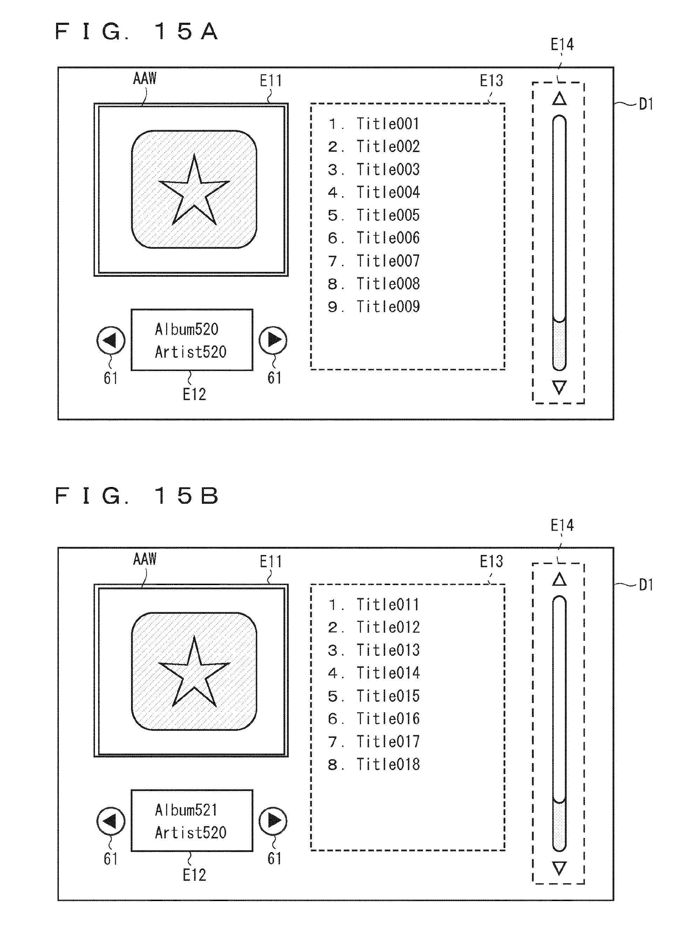

Next, referring to FIG. 15, a music selection operation flow will be described. With a state of zooming out the browser area E5 (see FIG. 11B), the user defines a target position where the target album artwork AAW exists, relying on colors. Then, a parallel shift to the target position is performed (see FIG. 10B) and the zooming-in is performed (see FIG. 11A). After the user finds and selects the target album artwork AAW, the user determines to select it with a mouse operation such as double click to open the music selection screen D1. In case that a plurality of albums corresponding to the selected and determined the album artwork AAW exist, the target album is selected by operating a switching button 61. For example, either a right or a left switching button 61 is pressed down in a state illustrated in FIG. 15A, the music selection screen D1 move to a state illustrated in FIG. 15B. In this case, as illustrated in FIG. 15B, through the album artwork AAW displayed on the artwork display area E11 does not change, it is recognized that a different album is selected because the album name differs. Naturally, the title name displayed on the title list display area E13 changes. In case that there is only one album corresponding to the selected album artwork AAW, the user is informed that there are no other corresponding albums by hiding or displaying in grey the switching button 61. Further, the album may be selected with right/left keys of the keyboard in place of the switching button 61. After the target album is selected and determined, a target music (title) is selected from the title list display area E13. After the title is selected, the music is reproduced with the reproduction operation of the button group display area E3 (see FIG. 2) for various reproduction operations, or is reproduced by selecting/determining a desired title from the title list display area E13 with the double click or the like of the mouse. In case that the target music does not exist or the next music to be reproduced is searched, the music selection screen D1 is closed and the album selection screen (see the browser area E5 in FIG. 2) is returned.

Next, referring to FIG. 16, a modification of displaying the album artworks AAW and the refinement will be described. The above example illustrates that the album artworks AAW are displayed on the browser area E5, but the modification will be described below, in which browsing as the album is realized by linking the album artwork AAW with an artist or a playlist in addition to the album. As illustrated in FIG. 16, the operation screen D0 according to the modification has a category selection area E21, a key selection area E23 and a keyword input area E22 in the operation screen D0 (see FIG. 2) illustrated in the above example.

In the category selection area E21, either one item of the "album", the "artist", the "playlist", and the "title" can be selected. An action at the time of the "album" selection is as described in the above example. While, when the "artist" is selected, the image group (for example, the album artwork AAW or the like of a signature album of each artist) linked to each artist is displayed on the same screen (browser area E5) as the "album" selection. When either image is selected, not the album name but the artist name is displayed (see FIG. 12A). Further, the mouse operation such as the double click or the like switches to an album selection screen (not illustrated) having a screen structure approximately as same as the music selection screen D1 (see FIG. 15). In the artwork display area E11 of the album selection screen, the album artwork AAW corresponding to each album instead of the artist is displayed. Also, when a plurality of albums corresponding to the selected artist exist, the album groups of the artist are switched to display on the album selection screen by the operation with the switching button 61.

While, the "playlist" is selected in the category selection area E21, an image group linked to each playlist is displayed on the browser area E5. When either image is selected, not the album name but the playlist name is displayed (see FIG. 12A). The mouse operation such as the double click or the like switches to a playlist selection screen (not illustrated) having a screen structure approximately as same as the music selection screen D1 (see FIG. 15). The music list in the playlist is displayed on the title list display area E13 of the playlist selection screen as the music selection screen D1. Further, in case that a plurality of playlists corresponding to the same artwork AW, these playlist groups can be switched to display on the playlist selection screen by the operation with the switching button 61.

While, the "title" is selected in the category selection area E21, the image group of the music artwork TAW of each music is displayed on the browser area 5. The music artwork TAW may be the same as the album artwork AAW. When either image is selected, not the album name but the title name is displayed (see FIG. 12A). Further, the music information is displayed on the reproduction information display area E2 and the music artwork TAW is displayed on the artwork display area E1 by the operation such as double click. After the title selection, the music is reproduced by the reproduction operation with the button group display area E3 (see FIG. 2) for various reproduction operation. Still further, in the browser area E5, when the music artwork TAW is displayed, it is possible to switch to display the lateral axis (X-axis) as a KEY and the vertical axis (Y-axis) as a BPM of the coordinate axes in FIG.6.

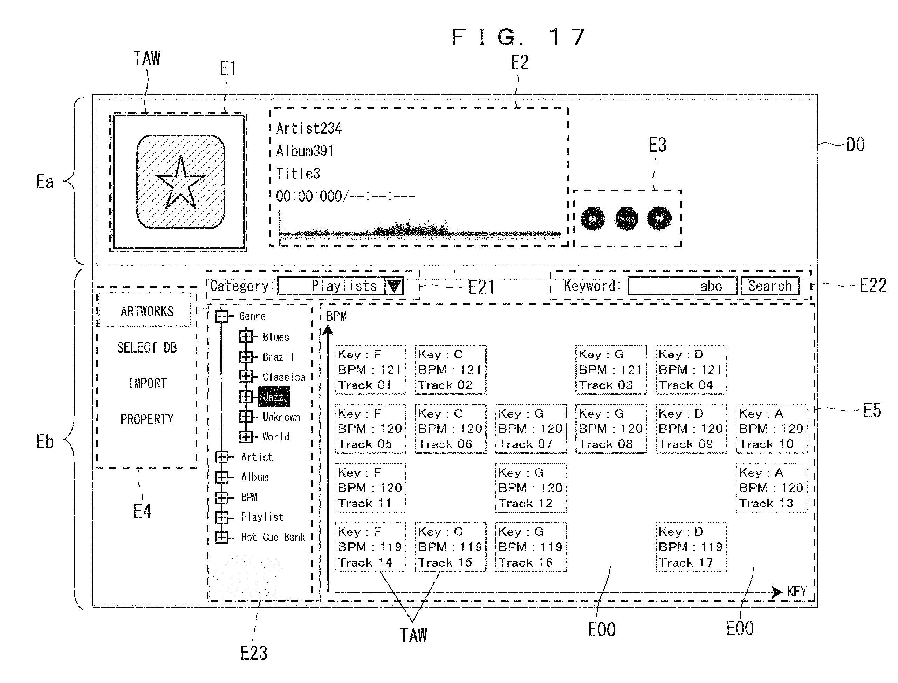

As illustrated in FIG. 17, in the browser area E5, the image groups of the music artworks TAW corresponding to music files in the selected database are arranged in the X-axis direction (lateral direction in FIG. 17) and the Y-axis direction (vertical direction in FIG. 17) based on the KEY and the BPM of the music. In FIG. 17, to illustrate simply, the image of each music artwork TAW is expressed with character information (tonality, BPM, track number) surrounded by a square frame. The image groups are not necessarily arranged without gaps in the vertical/lateral directions, but images of music having closer tonality are arranged as close as possible in the X-direction and images of music having closer BPM are arranged as close as possible in the Y-axis direction. Therefore, the blank areas E00 having no images therein are generated appropriately in the browser area E5.

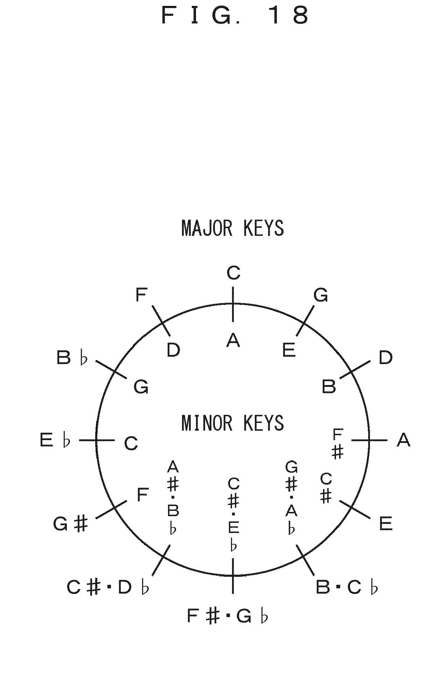

FIG. 18 is a diagram illustrating a tonality space of a cycle of fifths. As illustrated in FIG. 18, the "cycle of fifths" refers to the tonality space in which twelve tonalities of major keys and minor keys respectively are arranged annularly. Dominant keys are arranged in a clockwise direction and subdominant keys are arranged in a counterclockwise direction of each tonality, and a combination of a major key and a minor key positioned at a same angle makes a relative key. Therefore, the more tonalities are close on the cycle of fifths, the more common musical intervals are included, and discordances are difficult to occur when mixing. Shortly, since the image groups of the music artworks TAW correspond to the tonality arrangement in the clockwise direction on the cycle of fifths in the X-axis direction (arrow direction), the occurrences of discordances are restricted when the titles arranged in closer positions in the X-axis direction are selected and mixed. The X-axis is the looped endless axis based on the tonality space of the cycle of fifths. Therefore, the browser area E5 can shift the display position seamlessly in the X-axis direction.

While, as illustrated in FIG. 17, the vertical axis (Y-axis, axis perpendicular to the lateral axis) of the browser area E5 is assigned to the BPM. In the example in FIG. 17, the BPM gradually becomes larger along the arrow direction. Thus, in case that targets G arranged in positions closer to each other in the Y-axis direction are selected and mixed, music mixing can be realized without substantially changing reproduction speed of each music. When either image is selected, the title name, the BPM and the key are displayed in place of the album name (see FIG. 12A) on the browser area E5.

Further, when the "title" is selected in the category selection area E21, it is possible to switch to display the image group of the music artwork TAW of each music in which the lateral axis (X-axis) is set as KEY and the vertical axis (Y-axis) is set as BPM of the coordinate axes in FIG. 6, and it is possible to switch to display the image group showing an audio waveform of each music. When either image is selected, the title name is displayed instead of the album name (see FIG. 12A). Further, the music information is displayed on the reproduction information display area E2 and the music artwork TAW is displayed on the artwork display area E1 by the operation such as double click (see FIG. 17).

Next, the refinement by the key will be described as an example of the filtering condition input. The key selection area E23 can provide a key selection having a plurality of hierarchies based on the genre, the artist, the album, the BPM, the playlist or the like. Shortly, only corresponding items (artworks AW) can be displayed on the browser area E5 by designating a key of the genre and the like. In the example in FIG. 17, since "Genre-Jazz" is selected as refinement key, only items of "Jazz" in the genre are displayed.

Next, the refinement by a keyword will be described. The keyword input area E22 includes an input area and a search execution button. When an arbitrary keyword such as information or the like relating to the music associated information is input in the input area and the search execution button is pressed down, only corresponding items (artworks AW) can be displayed on the browser area E5. As the keyword, information relating to the music associated information such as the album name, the artist name, the playlist name, the genre name, the composer name, the remixer name, the label name, the release date, the rate (evaluation by the user), the BPM (Beats Per Minute), the tonality (key) of music, the database registration date, and the last update date, and the access history such as the number of reproduction or the reproduction date can be input. Whether the input character string is included in their character string information is discriminated, and when included, the corresponding items are displayed on the browser area E5. In case that there are a plurality of keyword inputs in the input area, a search by an AND condition or an OR condition is available.

As described above, according to the embodiment, the hue, the luminance and the saturation as the three elements of the HLS color space is acquired from each image, the arrangement of the image in the X-direction is determined based on the hue, and the arrangement of the image in the Y-direction is determined based on the luminance and the saturation. Thus, each image can be arranged regularly and in good presentation, leading to an efficient search for the target image. Further, since the X-axis and the Y-axis are made of the looped endless axes, the display position of the browser area E5 can be shifted seamlessly in the X-axis direction and the Y-axis direction based on the screen shift operation by the user and the target image can be found immediately.

In the above embodiment, the three elements (hue, luminance and saturation) of the HLS color space are exemplified as color element, but elements of an HSV color space or various color systems may be employed. Further, there colors (red, green and blue) of additive color mixture or three colors (cyan, magenta and yellow) of subtractive color mixture, etc. may be employed as color element. Still further, a combination of either two or more elements among them may be employed as color element. For example, the four elements of the hue, the luminance, brightness and the saturation may be employed as color element.

Further, in the embodiment above, though the hue is assigned to the X-axis and the luminance and the saturation is assigned to the Y-axis, not applying only thereto, color element assignment to each axis is arbitrary such that the hue and the saturation may be assigned to the X-axis and the luminance may be assigned to the Y-axis. Further, the number of assigned color elements is arbitrary such that two or more color elements are assigned to both the X-axis and the Y-axis. Still further, the user can arbitrarily set as to assign which color element to which axis.

Still further, in the embodiment above, the threshold value of the correction saturation S' is set at about "0.12(0.0(Min)-1.0(Max))", but it may be dynamically determined based on a color distribution or the number of images of the target image group. Still further, the user can arbitrarily set the threshold value of the correction saturation S'.

Still further, in the embodiment above, when the filtering condition is input, either layout of the filtering pattern 1 or the filtering pattern 2 is applied based on the number of decreased images (see FIG. 14), but either filtering pattern of the filtering pattern 1 or the filtering pattern 2 may be fixedly employed regardless of the decreased number of images. Still further, the user can arbitrarily set which layout of the filtering pattern 1 or the filtering pattern 2 is employed.

Still further, each function of the PC 10 illustrated in the above embodiment can be provided as program. The program can be provided to store in various recording media (such as a CD-ROM, a flash memory). Shortly, the program which causes a computer to function as each function of the PC 10 and the recording medium having the program therein are included in the range of scope of the invention.

Still further, in the embodiment above, the invention is exemplified to apply to the PC 10 (file music player), but can also be applied to a reproduction device which reproduces contents (such as video contents) other than music or a search device. More specifically, the invention can be applied to a DJ device dealing with numerous music files, a VJ device dealing with numerous video files, a portable audio player, an HDD component, an image viewer (such as an application or a browser plug-in operable on a PC, a digital camera or a mobile terminal), a mail order/download sale site displaying lots of merchandise images.

Still further, each function of the PC 10 may be realized by a device (server) on the network NW. In this case, the device on the network NW prepares a browser (display data which shows an arrangement result in which a plurality of images are arranged on the coordinate space based on three or more color elements) for displaying the operation screen D0 (browser area E5), and transmits to a user terminal connected to the device (server) on the network NW. In this case, the user terminal may have, at least, a display device, an operation device and an audio output unit. Also, the invention can be applied to a cloud computing. Furthermore, the invention can be realized by a system (target arrangement system) having three or more structure elements such as the server, the PC, the user terminal. In this case, the user terminal may have, at least, the operation unit 12 (operation device), the display screen (display unit 11), the communication device (communication unit 14) for communicating with the server and/or the PC among the structures illustrated in FIG. 1. Other devices may be provided in either one of the server, the PC and the user terminal, or provided separately therein. Modifications may be applied without departing from the scope of the invention.

### [Reference Numerals]

10: PC 20: dedicated application 51: color element acquisition device 52: representative value determination device 53: arrangement determination device 54: image arrangement device 55: display control device AW: album artwork D0: operation screen D1: music selection screen E1: artwork display area E2: reproduction information display area E3: button group display area E4: user operation area E5: browser area E00: blank area E11: artwork display area E12: music information display area E13: title list display area E14: scroll bar display area Ea: player section Eb: browser section

## Claims

1. An image arrangement method arranging a plurality of images on a coordinate space having an X-axis and a Y-axis comprising steps of:
a color element acquisition step that acquires N color elements forming each image where N is an integer satisfying N≥3 from each image;
an arrangement determination step that determines an arrangement of the image in the X-axis direction based on an M color element among the N color elements where M is an integer satisfying 1≤M≤N and that determines an arrangement of the image in the Y-axis direction based on a remaining (N-M) color element; and
an image arrangement step that arranges the plurality of images on the coordinate space based on the determined arrangements.

2. The image arrangement method according to claim 1, wherein the N color elements are hue, luminance and saturation that are three elements of an HLS color space.

3. The image arrangement method according to claim 2, wherein the arrangement determination step determines the arrangement of the image in the X-axis direction based on the hue and determines the arrangement of the image in the Y-axis direction based on the luminance and the saturation.

4. The image arrangement method according to claim 3, wherein the X-axis is a looped endless axis where each image is arranged based on a color circle.

5. The image arrangement method according to claim 4, wherein the Y-axis is a looped endless axis having a first semi-arc axis where an image equal to or more than a predetermined saturation is arranged based on the luminance and a second semi-arc axis where an image less than the predetermined saturation is arranged based on the luminance, and the first semi-arc axis and the second semi-arc axis are configured to form one arc to connect a maximum value of luminance on one axis to a maximum value of luminance on the other axis and to connect a minimum value of luminance on the one axis to a minimum value of luminance on the other axis.

6. The image arrangement method according to claim 5, wherein the predetermined saturation is defined by correction saturation calculated in consideration of luminance effect.

7. The image arrangement method according to claim 5, wherein the color element acquisition step acquires the hue, the luminance and the saturation for all pixels of each image, the method further has a representative value determination step that determines a representative value of the hue, the luminance and the saturation of each image based on the hue, the luminance and the saturation of all the pixels, and the arrangement determination step determines the arrangements in the X-axis direction and the Y-axis direction based on each representative value of the hue, the luminance and the saturation of each image.

8. A browsing method comprising steps of:
each step of the image arrangement method as set forth in claim 7; and
a display control step that displays the coordinate space where the plurality of images are arranged on a display screen,
wherein the display control step shifts display positions in an X-axis direction and a Y-axis direction on the coordinate space seamlessly based on a screen shift operation by a user.

9. The browsing method according to claim 8, wherein the display control step changes display sizes of the coordinate space and each image based on a screen enlargement operation and a screen reduction operation by the user, and each image is filled with a representative color based on each representative value of the hue, the luminance and the saturation when an image size of each image is equal to or less than a predetermined size.

10. The browsing method according to claim 8, wherein when an arbitrary image is selected by a selection operation by the user in a state that each image has not been completely read in, the display control step starts to read in from the arbitrary image.

11. The browsing method according to claim 8, wherein when the number of images displayed on the coordinate space decreases by filtering condition input by the user, the display control step displays only an image corresponding to the filtering condition while maintaining an image layout before the decrease.

12. The browsing method according to claim 8, wherein when the number of images displayed on the coordinate space decreases by filtering condition input by the user, the display control step displays a rearranged coordinate space by the arrangement determination step only for an image corresponding to the filtering condition.

13. The browsing method according to claim 8, wherein when the number of images displayed on the coordinate space decreases by filtering condition input by the user and the decreased number of images is equal to or more than a predetermined number, the display control step displays a rearranged coordinate space by the arrangement determination step only for an image corresponding to the filtering condition, and when the decreased number of images is less than the predetermined number, the display control step displays only an image corresponding to the filtering condition while maintaining an image layout before the decrease.

14. A display control device arranging a plurality of images on a coordinate space having an X-axis and Y-axis comprising:
a color element acquisition device that acquires N color elements forming each image where N is an integer satisfying N≥3 from each image;
an arrangement determination device that determines an arrangement of the image in the X-axis direction based on an M color element among the N color elements where M is an integer satisfying 1≤M≤N and that determines an arrangement of the image in the Y-axis direction based on a remaining (N-M) color element; and
an image arrangement device that arranges the plurality of images on the coordinate space based on the determined arrangements.

15. A server arranging a plurality of images on a coordinate space having an X-axis and a Y-axis and providing the coordinate space to a user terminal comprising:
a color element acquisition device that acquires N color elements forming each image where N is an integer satisfying N≥3 from each image;
an arrangement determination device that determines an arrangement of the image in the X-axis direction based on an M color element among the N color elements where M is an integer satisfying 1≤M≤N and that determines an arrangement of the image in the Y-axis direction based on a remaining (N-M) color element; and
an image arrangement device that arranges the plurality of images on the coordinate space based on the determined arrangements.

16. A user terminal used to connect with the server as set forth in claim 15 and comprising a display screen that displays the coordinate space and an operation device that selects an arbitrary image among a plurality of images arranged on the coordinate space.

17. A communication system comprising the server as set forth in claim 15, and a user terminal used to connect with the server and having a screen display that displays the coordinate space and an operation device that selects an arbitrary image among a plurality of images arranged on the coordinate space, the server being capable of communicating with the user terminal.

18. An image arrangement system arranging a plurality of images on a coordinate space having an X-axis and a Y-axis and providing the coordinate space to a user terminal comprising:
a color element acquisition device that acquires N color elements forming each image where N is an integer satisfying N≥3 from each image;
an arrangement determination device that determines an arrangement of the image in the X-axis direction based on an M color element among the N color elements where M is an integer satisfying 1≤M≤N and that determines an arrangement of the image in the Y-axis direction based on a remaining (N-M) color element;
an image arrangement device that arranges the plurality of images on the coordinate space based on the determined arrangements;
a display screen that displays the coordinate space; and
an operation device that selects an arbitrary image among the plurality of images displayed on the display screen.

19. A program that causes a computer to execute each step of the image arrangement method as set forth in either one of claims 1 to 7 or each step of the browsing method as set forth in either one of claims 8 to 13.
